# DEMANDE DE BREVET EUROPEEN

(11) **EP 4 799 843 A1**
(43) Date de publication de la demande: **02.09.2026**
(21) Numéro de dépôt: 26161234.5
(22) Date de dépôt: 27.02.2026
(51) Int. Cl.: B60K 35/10, B60K 35/80

(54) **SYSTÈME ET PROCÉDÉ DE COMMANDE À DISTANCE D'AU MOINS UN ÉQUIPEMENT DE VÉHICULE**

(30) Priorité: 28.02.2025 FR 2502036
(71) Demandeur: Faurecia Clarion Electronics Europe, 75012 Paris (FR)
(72) Inventeur: BOIS, Frederick, 67100 STRASBOURG (FR); NGUYEN, Alain, 94170 LE PERREUX SUR MARNE (FR); DA CRUZ, Stéphane, 75012 PARIS (FR); LIEM, Steve, 95610 ERAGNY SUR OISE (FR)
(74) Mandataire: Lavoix

(57) **Abrégé**

Ce système de commande à distance d'au moins un équipement de véhicule comprend un capteur d'images (14) configuré pour capter des images d'un utilisateur et détecter une direction du regard de l'utilisateur, un dispositif de commande connecté au capteur d'images et configuré pour commander un actionneur de déplacement de l'équipement, ainsi qu'un organe de contrôle (16) actionnable manuellement par l'utilisateur du véhicule, le dispositif de commande (18) étant configuré pour :
- déterminer (26) un équipement cible (12) en fonction d'une direction du regard de l'utilisateur fournie par le capteur d'images ;
- recevoir (28) une validation de l'utilisateur, ladite validation étant effectuée par un premier actionnement de l'organe de contrôle,
- recevoir une commande (32) de l'organe de contrôle (16) et actionner un déplacement dudit équipement cible en fonction de ladite commande, ladite commande étant effectuée par un deuxième actionnement de l'organe de contrôle effectué par l'utilisateur.

## Description

La présente invention concerne un système de commande à distance d'au moins un équipement de véhicule, et un véhicule équipé d'un tel système de commande.

L'invention concerne également un procédé de commande à distance d'au moins un équipement de véhicule.

L'invention se situe dans le domaine du contrôle à distance de certains équipements de véhicules automobiles qui sont configurés pour être déplacés par un actionneur, pour un déplacement tel que par exemple une ouverture/fermeture.

En général, les véhicules, par exemple les véhicules automobiles, comportent divers équipements configurés pour se déplacer entre au moins deux positions, par exemple un couvercle de boîte de stockage, des vitres de portières qui sont déplaçables entre une position d'ouverture et une position de fermeture, ou des miroirs internes ou externes qui sont mobiles selon plusieurs axes. Le déplacement est en général commandé manuellement, par actionnement sur l'équipement lui-même ou sur un bouton de commande associé à chaque équipement.

Cependant, au moins certains équipements de ce type peuvent être situés à distance d'un utilisateur, notamment du conducteur du véhicule lorsque celui-ci est en position de conduite, la distance pouvant être typiquement supérieure à une longueur de bras. Alors, l'actionnement d'un tel équipement, par exemple l'ouverture d'une boîte de stockage munie d'un couvercle, implique un mouvement du conducteur en direction de l'équipement, ce qui constitue à la fois une distraction et un risque de sécurité pour la conduite.

Il existe un besoin d'améliorer l'ergonomie et la sécurité en facilitant la commande à distance d'un équipement du véhicule pour actionner un déplacement de cet équipement.

A cet effet, l'invention a pour objet un système de commande à distance d'au moins un équipement de véhicule, comprenant un capteur d'images configuré pour capter des images d'un utilisateur de véhicule et détecter une direction du regard dudit utilisateur, un dispositif de commande connecté audit capteur d'images, ledit dispositif de commande étant configuré pour commander un actionneur de déplacement dudit équipement, le système de commande à distance comportant en outre un organe de contrôle actionnable manuellement par l'utilisateur du véhicule. Ce dispositif de commande est configuré pour :
- déterminer un équipement cible en fonction d'une direction du regard de l'utilisateur fournie par le capteur d'images ;
- recevoir une validation de l'utilisateur, ladite validation étant effectuée par un premier actionnement de l'organe de contrôle,
- recevoir une commande de l'organe de contrôle et actionner un déplacement dudit équipement cible en fonction de ladite commande, ladite commande étant effectuée par un deuxième actionnement de l'organe de contrôle effectué par l'utilisateur.

Avantageusement, l'utilisation de la direction du regard de l'utilisateur combinée avec l'utilisation de l'organe de contrôle permet une commande de déplacement facile et ergonomique, via l'organe de contrôle, de tout équipement cible du véhicule.

Suivant d'autres aspects avantageux de l'invention, le système de commande comprend une ou plusieurs des caractéristiques suivantes, prises isolément ou suivant toutes les combinaisons techniquement possibles.

Le véhicule ayant un volant de direction, dans lequel ledit organe de contrôle est disposé sur ledit volant ou à une distance inférieure à 50 cm dudit volant.

L'équipement cible est configuré pour être déplacé entre une position d'ouverture et une position de fermeture.

L'organe de contrôle est un bouton-poussoir rotatif.

Le premier actionnement est un appui sur ledit bouton-poussoir rotatif.

Le deuxième actionnement est une rotation dudit bouton-poussoir rotatif, le sens de la rotation définissant une un sens de déplacement dudit équipement cible.

Le système comprend en outre au moins une source de lumière, le dispositif de commande étant configuré pour commander ladite source de lumière pour éclairer l'équipement cible après réception du premier actionnement de l'organe de contrôle.

La source de lumière comporte une ou plusieurs diodes électroluminescentes.

L'invention concerne également un procédé de commande d'au moins un équipement de véhicule, mis en œuvre par un système de commande comprenant un capteur d'images configuré pour capter des images d'un utilisateur de véhicule et détecter une direction du regard dudit utilisateur, un dispositif de commande connecté audit capteur d'images, ledit dispositif de commande étant configuré pour commander une actionneur de déplacement dudit équipement, le système comportant en outre un organe de contrôle actionnable manuellement par l'utilisateur du véhicule, le procédé étant mis en œuvre par ledit dispositif de commande et comportant des étapes de :
- détermination d'un équipement cible en fonction d'une direction du regard de l'utilisateur fournie par le capteur d'images ;
- réception d'une validation de l'utilisateur, ladite validation étant effectuée par un premier actionnement de l'organe de contrôle
- réception d'une commande de l'organe de contrôle et actionnement d'un déplacement dudit équipement cible en fonction de ladite commande, ladite commande étant effectuée par un deuxième actionnement de l'organe de contrôle effectué par l'utilisateur.

L'invention concerne également un programme d'ordinateur comportant des instructions logicielles qui, lorsqu'elles sont exécutées par un ordinateur, mettent en œuvre un procédé de commande à distance d'au moins un équipement de véhicule, tel que défini ci-dessus.

L'invention apparaîtra plus clairement à la lecture de la description qui va suivre, donnée uniquement à titre d'exemple non limitatif, et faite en référence aux dessins dans lesquels :

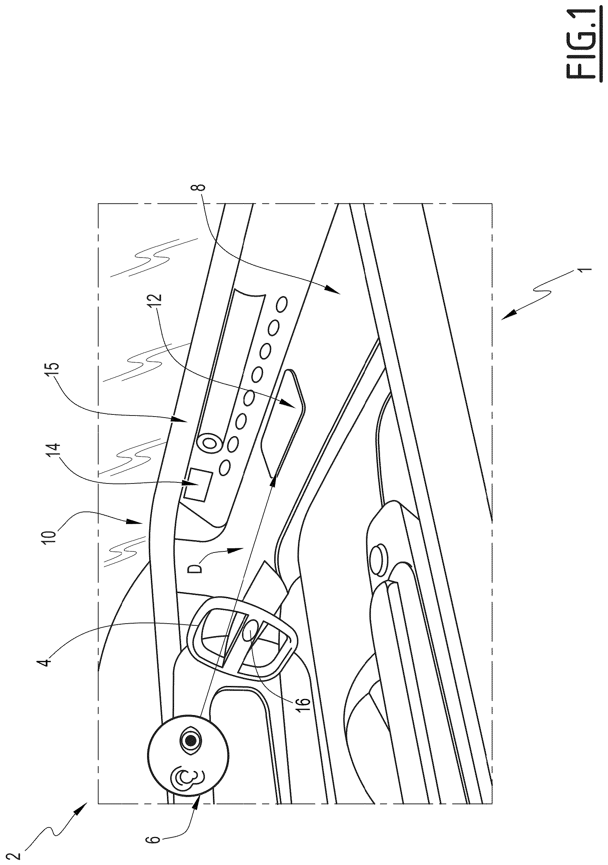

[Fig. 1] la figure 1 est une vue schématique d'une partie d'habitacle de véhicule dans lequel un système de commande à distance est installé ;
[Fig 2] la figure 2 est un synoptique d'un système de commande à distance selon un mode de réalisation ;
[Fig 3] la figure 3 représente schématiquement une cartographie spatiale des équipements commandables, et
[Fig 4] la figure 4 est un logigramme des principales étapes d'un procédé de commande à distance selon un mode de réalisation.

L'invention s'applique pour tout type de véhicule, en particulier pour un véhicule de transport, tel qu'une voiture, un bus.

La 1 figure illustre schématiquement une partie d'habitacle 2 de véhicule automobile 1.

Le véhicule 1 comporte un volant de direction 4.

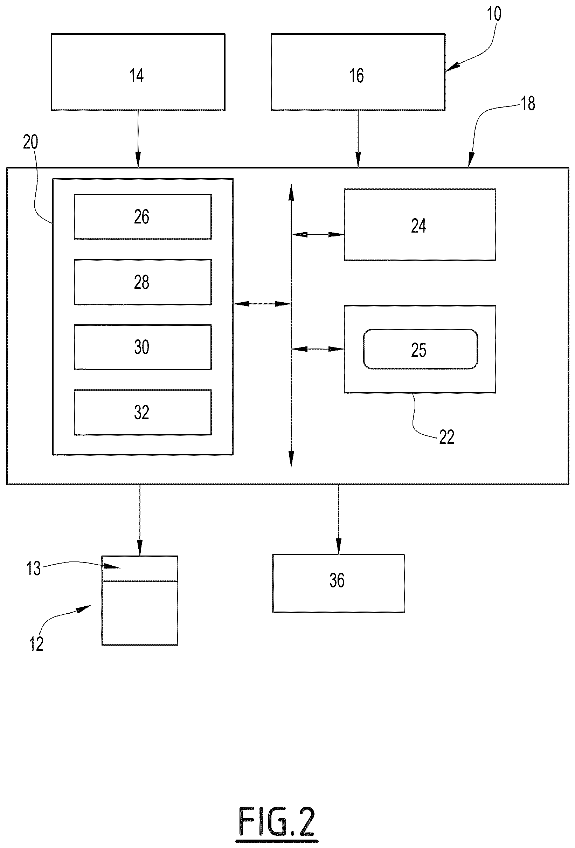

Dans la figure 2 est représenté schématiquement un utilisateur 6 du véhicule 1, l'utilisateur 6 étant le conducteur du véhicule 1, installé dans une position de conduite derrière le volant de direction 4. Il est à noter que l'invention s'applique également pour tout autre utilisateur du véhicule, par exemple un passager.

Le véhicule comporte également une planche de bord 8, dans laquelle est agencée une boîte de stockage munie d'un couvercle 12, qui est déplaçable entre une position d'ouverture et une position de fermeture, par un actionneur 13 (visible dans la figure 2). Le couvercle 12 est un exemple d'équipement déplaçable par un système de commande à distance 10, appelé simplement système de commande 10 ci-après, tel que plus en détail ci-après en référence à la figure 2.

Le système de commande 10 est configuré pour la commande de plusieurs équipements 12, déplaçables par l'intermédiaire d'un actionneur entre au moins deux positions, comme par exemple un couvercle de boîte de stockage, une vitre du véhicule, un miroir latéral du véhicule, des aérateurs du véhicule, des dispositifs d'éclairage (e.g. une liseuse). La liste est bien entendu fournie à titre d'exemple et n'est pas exhaustive.

Le système de commande 10 comporte un capteur d'images 14 configuré pour capter des images d'un utilisateur de véhicule et détecter une direction D du regard de l'utilisateur.

Par exemple le capteur d'images 14 est un système DMS (« Driver Monitoring System »), intégré par exemple dans la planche de bord 8, ou dans un tableau de bord 15 du véhicule, ou encore dans le volant de direction 4. Le capteur d'images 14 est judicieusement positionné en vis-à-vis de la position de conduite du véhicule, de manière à capter des images du conducteur du véhicule et à calculer la direction D du regard du conducteur, par exemple sous la forme d'un vecteur 3D dans un référentiel spatial choisi.

En variante le capteur d'images 14 est un système OMS (« Occupant Monitoring System ») configuré pour capter la direction du regard d'un autre occupant du véhicule.

En variante non représentée, un capteur d'images supplémentaire est utilisé pour améliorer la précision de la direction du regard, par exemple une caméra située au centre de la planche de bord ou au niveau du rétroviseur central.

Le système de commande 10 comporte en outre un organe de contrôle 16 actionnable manuellement par l'utilisateur 6.

L'organe de contrôle 16 est par exemple un bouton-poussoir rotatif.

L'organe de contrôle 16 est de préférence situé dans un emplacement facilement atteignable par l'utilisateur 6 du véhicule.

Par exemple, lorsque l'utilisateur 6 considéré est le conducteur du véhicule, l'organe de contrôle 16 est de préférence situé sur le volant 4 ou à proximité du volant 4, c'est-à-dire à une distance inférieure ou égale à 50 cm du volant 4, de préférence inférieure à 30 cm, de manière à être facilement manipulable par le conducteur 6, sans avoir besoin de se pencher.

Le système de commande 10 comporte en outre un dispositif de commande 18, connecté au capteur d'images 14 et à l'organe de contrôle 16, par exemple par des interfaces de communication bidirectionnelles, filaire ou sans fil.

Le dispositif de commande 18 est un dispositif électronique programmable, comportant un processeur de calcul 20, une unité de mémoire électronique 22 et une unité d'interface de communication 24, reliées par un bus de communication interne 25.

Le dispositif de commande 18 est configuré pour commander l'actionnement d'un ou plusieurs équipements 12, chaque équipement 12 ayant un actionneur 13 de déplacement de l'équipement entre au moins deux positions, par exemple une position d'ouverture et une position de fermeture dans le cas d'un couvercle ou d'une vitre. Par exemple le dispositif de commande 18 est configuré pour transmettre des commandes via une liaison de communication à chaque actionneur 13 d'un équipement 12.

L'unité d'interface de communication 24 peut comporter plusieurs modules pour permettre l'interface avec respectivement le capteur d'images 14, l'organe de contrôle 16, chaque actionneur 13 d'un équipement 12.

Le dispositif de commande 18 comporte un module de détermination 26, un module de validation 28, un module optionnel d'éclairage 30, un module de commande 32 décrits plus en détail ci-après, configurés pour coopérer pour mettre en œuvre un procédé de commande à distance d'un équipement 12.

Dans un mode de réalisation, les modules 26, 28, 30, 32 sont réalisés sous forme d'instructions logicielles formant un programme d'ordinateur, qui, lorsqu'il est exécuté par un ordinateur, met en œuvre un procédé de commande selon l'invention.

Le programme d'ordinateur comportant des instructions logicielles est en outre apte à être enregistré sur un support non transitoire lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante non représentée, les modules 26, 28, 30, 32 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*), ou encore de circuits intégrés dédiés, tels que des ASIC (de l'anglais *Application Specific Integrated Circuit*)*.*

Le module de détermination 26 est configuré pour déterminer un équipement cible 12 en fonction d'une direction du regard de l'utilisateur fournie par le capteur d'images.

Dans un mode de réalisation, une cartographie 25 représentative des équipements 12 commandables en déplacement est utilisée en relation avec la direction D du regard, une intersection entre la direction du regard et la cartographie 25 permettant de déterminer l'équipement cible.

Le module de validation 28 est configuré pour recevoir une validation de l'utilisateur, cette validation étant effectuée par un premier actionnement de l'organe de contrôle. En d'autres termes, un premier signal, dit de validation, est reçu en provenance de l'organe de contrôle 16.

Par exemple, lorsque l'organe de contrôle 16 est un bouton-poussoir, le premier actionnement est un appui (ou un « click ») sur le bouton.

Ainsi, par ce premier actionnement de l'organe de contrôle, l'utilisateur indique l'équipement cible.

Optionnellement, le véhicule 1 comporte également une ou plusieurs sources de lumière 36, commandables par le dispositif de commande 18, est disposées de manière à éclairer sélectivement, par un motif lumineux, le ou chaque équipement 12. Ces sources de lumière sont par exemple des diodes électroluminescentes, par exemple des matrices de diodes électroluminescentes, commandables indépendamment ou par blocs.

En variante, chaque équipement 12 est associé à une source de lumière 36, qui est par exemple un voyant lumineux à diode(s) électroluminescente(s). Les divers voyant lumineux 36 sont également commandables par le dispositif de commande 18.

Optionnellement, le module 30 de commande d'éclairage est configuré pour commander la ou les sources lumineuses 36 pour éclairer l'équipement cible déterminé.

Avantageusement, cela permet de fournir une indication visuelle à l'utilisateur, indiquant l'équipement cible déterminé, permettant alors à l'utilisateur de s'assurer que l'équipement cible est celui qu'il souhaite choisir.

Le module de commande 32 est configuré pour recevoir une commande de l'organe de contrôle et actionner un déplacement de l'équipement cible en fonction de la commande, cette commande étant effectuée par un deuxième actionnement de l'organe de contrôle.

Par exemple, lorsque l'organe de contrôle est un bouton-poussoir rotatif, le deuxième actionnement est une rotation, le sens de la rotation permettant alors d'indiquer un sens de déplacement de l'équipement cible choisi.

En variante, le deuxième actionnement peut être un appui prolongé sur le bouton-poussoir, le relâchement du bouton poussoir induisant un arrêt du déplacement de l'équipement cible.

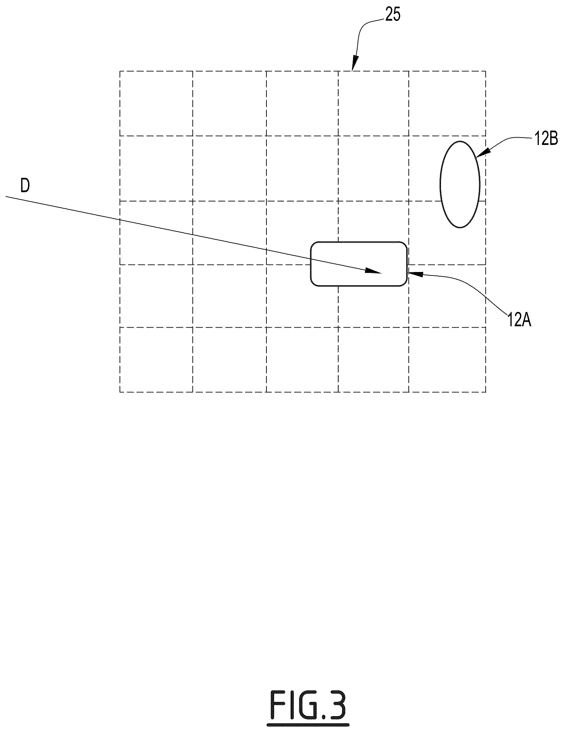

La figure 3 illustre schématiquement une cartographie 25 sur laquelle sont représentés deux équipements commandables 12A, 12B, la cartographie étant quadrillée en cellules. La direction D du regard de l'utilisateur indique une cellule du quadrillage, et l'équipement le plus proche identifié sur la cartographie 25, qui est l'équipement 12A dans la figure 3, est sélectionné comme équipement cible.

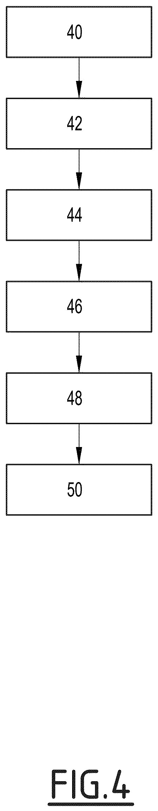

La figure 4 est un logigramme des principales étapes d'un procédé de commande à distance d'au moins un équipement de véhicule.

Le procédé est mis en œuvre par un système de commande 10 tel que décrit ci-dessus.

Le procédé de commande comprend une étape 40 d'initialisation du procédé et de réception d'une direction du regard de l'utilisateur, par exemple sous forme de vecteur 3D dans un référentiel spatial prédéterminé.

Optionnellement, l'initialisation 40 est mise en œuvre par une action prédéterminée de l'utilisateur sur l'organe de contrôle, par exemple un double click. En variante, si le véhicule est équipé d'un système de reconnaissance de commandes vocales, l'initialisation pourrait être effectuée par commande vocale.

Le procédé comprend en outre une étape 42 de détermination d'un équipement cible en fonction de la direction du regard. Par exemple, une cartographie 25 est utilisée à cette étape, et une cellule de quadrillage intersectée par la direction du regard est détectée, et l'équipement contenu, au moins partiellement, dans cette cellule est choisi comme équipement cible.

Le procédé comprend alors une réception 44 d'une validation de l'utilisateur. L'utilisateur effectue la validation par un premier actionnement de l'organe de contrôle, par exemple un click, ce qui entraîne l'émission d'un premier signal, qui est reçu par le dispositif de commande.

Optionnellement, le procédé comporte une étape 46 d'éclairage de l'équipement cible, fournissant une indication visuelle permettant à l'utilisateur de confirmer la sélection.

Lorsque cette étape 46 est mise en œuvre, l'utilisateur bénéficie d'un retour visuel lui permettant de confirmer que l'équipement qui sera actionné par le système est celui qu'il souhaite actionner.

Lorsque l'équipement choisi est validé, le procédé comporte en outre une étape 48 de réception d'une commande de l'organe de contrôle, effectuée par un deuxième actionnement de l'organe de contrôle effectué par l'utilisateur. En d'autres termes, l'utilisateur effectue un deuxième actionnement de l'organe de contrôle, par exemple une rotation, ce qui entraîne l'émission d'un deuxième signal, reçu par le dispositif de commande.

La commande reçue de l'organe de contrôle est transformée en commande de déplacement de l'équipement cible.

Par exemple, une rotation de l'organe de contrôle, dans un premier sens, commande une ouverture d'un couvercle de boîte de stockage. Par exemple, une rotation de l'organe de contrôle, dans un deuxième sens, opposé au premier sens, commande une fermeture d'un couvercle de boîte de stockage.

Le procédé comprend ensuite, dans un mode de réalisation, une sortie 50 du procédé de commande à distance.

Selon une variante, la sortie 50 du procédé de commande à distance est effectuée par application par l'utilisateur d'une action prédéterminée sur l'organe de contrôle, comme par exemple un double click ou autre. En variante, si le véhicule est équipé d'un système de reconnaissance de commandes vocales, la sortie pourrait être effectuée par commande vocale.

Le procédé décrit ci-dessus permet d'appairer l'organe de contrôle et un équipement cible déterminé en fonction de la direction du regard de l'utilisateur, l'organe de contrôle étant alors configuré pour commander à distance l'équipement choisi.

Avantageusement, lorsque l'organe de contrôle est positionné à proximité de l'utilisateur, par exemple du conducteur, cela permet de commander aisément divers équipements à distance, ce qui est plus confortable et permet de diminuer le risque de d'accidents. Ainsi, une meilleure sécurité de conduite du véhicule est obtenue.

## Revendications

1. Système de commande à distance (10) d'au moins un équipement (12) de véhicule (1), comprenant un capteur d'images (14) configuré pour capter des images d'un utilisateur (6) de véhicule et détecter une direction du regard dudit utilisateur, un dispositif de commande (18) connecté audit capteur d'images (14), ledit dispositif de commande (18) étant configuré pour commander un actionneur (13) de déplacement dudit équipement (12), le système de commande à distance (10) comportant en outre un organe de contrôle (16) actionnable manuellement par l'utilisateur du véhicule, le dispositif de commande (18) étant configuré pour :
- déterminer (26) un équipement cible en fonction d'une direction du regard de l'utilisateur fournie par le capteur d'images ;
- recevoir une validation (28) de l'utilisateur, ladite validation étant effectuée par un premier actionnement de l'organe de contrôle,
- recevoir (32) une commande de l'organe de contrôle et actionner un déplacement dudit équipement cible en fonction de ladite commande, ladite commande étant effectuée par un deuxième actionnement de l'organe de contrôle effectué par l'utilisateur.

2. Système de commande selon la revendication 1, le véhicule ayant un volant de direction (4), dans lequel ledit organe de contrôle (16) est disposé sur ledit volant ou à une distance inférieure à 50 cm dudit volant.

3. Système de commande selon la revendication 1 ou 2, dans lequel ledit équipement cible (12) est configuré pour être déplacé entre une position d'ouverture et une position de fermeture.

4. Système de commande selon l'une quelconque des revendications 1 à 3, dans lequel l'organe de contrôle (16) est un bouton-poussoir rotatif.

5. Système de commande selon la revendication 4, dans lequel le premier actionnement est un appui sur ledit bouton-poussoir rotatif.

6. Système de commande selon la revendication 4 ou 5, dans lequel le deuxième actionnement est une rotation dudit bouton-poussoir rotatif, le sens de la rotation définissant une un sens de déplacement dudit équipement cible (12).

7. Système de commande selon l'une quelconque des revendications 1 à 6, comprenant en outre au moins une source de lumière (36), le dispositif de commande (18) étant configuré pour commander (30) ladite source de lumière (36) pour éclairer l'équipement cible (12) après réception du premier actionnement de l'organe de contrôle (16).

8. Système de commande selon la revendication 7, dans lequel ladite source de lumière (36) comporte une ou plusieurs diodes électroluminescentes.

9. Procédé de commande d'au moins un équipement de véhicule, mis en œuvre par un système de commande à distance (10) comprenant un capteur d'images configuré pour capter des images d'un utilisateur de véhicule et détecter une direction du regard dudit utilisateur, un dispositif de commande connecté audit capteur d'images, ledit dispositif de commande étant configuré pour commander une actionneur de déplacement dudit équipement, le système comportant en outre un organe de contrôle actionnable manuellement par l'utilisateur du véhicule, le procédé étant mis en œuvre par ledit dispositif de commande (18) et comportant des étapes de :
- détermination (42) d'un équipement cible en fonction d'une direction du regard de l'utilisateur fournie par le capteur d'images ;
- réception (44) d'une validation de l'utilisateur, ladite validation étant effectuée par un premier actionnement de l'organe de contrôle
- réception (48) d'une commande de l'organe de contrôle et actionnement d'un déplacement dudit équipement cible en fonction de ladite commande, ladite commande étant effectuée par un deuxième actionnement de l'organe de contrôle effectué par l'utilisateur.

10. Véhicule comportant un système de commande à distance (10) d'au moins un équipement (12) dudit véhicule selon l'une quelconque des revendications 1 à 8.
